# EUROPÄISCHE PATENTSCHRIFT

(11) **EP 2 358 482 B1**
(45) Veröffentlichungstag und Bekanntmachung des Hinweises auf die Patenterteilung: **05.06.2013**
(21) Anmeldenummer: 09808981.6
(22) Anmeldetag: 18.12.2009
(51) Int. Cl.: B05C 17/02, B29B 13/02, B29C 57/00, B29D 99/00, B29C 43/00

(54) **VERFAHREN ZUR HERSTELLUNG EINES ROHRKÖRPERS AUS KUNSTSTOFF MIT WENIGSTENS EINEM INNENBUND FÜR EINEN FARBWALZENKÖRPER**
METHOD FOR PRODUCING A TUBULAR BODY FROM PLASTIC HAVING AT LEAST ONE INNER COLLAR FOR AN INK ROLLER BODY
PROCÉDÉ DE FABRICATION D'UN CORPS TUBULAIRE EN PLASTIQUE COMPORTANT AU MOINS UN ÉPAULEMENT INTÉRIEUR POUR UN ÉLÉMENT DE ROULEAU À PEINDRE

(30) Priorität: 19.12.2008 DE 102008063707; 02.03.2009 DE 102009011011
(43) Veröffentlichungstag der Anmeldung: 24.08.2011
(73) Patentinhaber: Storch-Ciret Holding GmbH, 42107 Wuppertal (DE)
(72) Erfinder: SAUER, Helmut, 88279 Amtzell (DE)
(74) Vertreter: Otten, Herbert
(86) Internationale Anmeldenummer: PCT/DE2009/001761
(87) Internationale Veröffentlichungsnummer: WO 2010/069293

(56) Entgegenhaltungen:
- WO-A1-03/070451
- DE-A1- 4 140 813
- DE-A1- 4 427 113
- DE-A1- 19 607 501
- FR-A- 1 130 575
- FR-A1- 2 529 391
- US-A- 3 495 301
- US-A- 5 039 466

## Beschreibung

Die Erfindung betrifft ein Verfahren zur Herstellung eines Rohrkörpers aus Kunststoff mit wenigstens einem Innenbund für einen Farbwalzenkörper gemäß dem Oberbegriff des Anspruchs 1.

Aus der DE 41 40 813 A1 ist ein Farbwalzenkörper bekannt, welcher einen als Kunststoff-Spritzgussteil hergestellten Rohrkörper mit Raststegen umfasst, welche jeweils als Innenbund ausgebildet sind.

Es ist Aufgabe der Erfindung, ein Verfahren zur Herstellung eines Rohrkörpers aus Kunststoff mit wenigstens einem Innenbund für einen Farbwalzenkörper vorzuschlagen, welches kostengünstig ist und auch die Herstellung von Rohrkörpern mit kleinem Durchmesser ermöglicht.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

Das erfindungsgemäße Verfahren zur Herstellung eines Rohrkörpers aus Kunststoff mit wenigstens einem Innenbund für einen Farbwalzenkörper sieht vor, eine Innenwand eines Kunststoffrohres in einem Umformbereich zu erwärmen, wobei sich der Umformbereich in einem Innenraum des Kunststoffrohres von einem ersten Ende des Kunststoffrohres aus in Richtung eines zweiten Endes des Kunststoffrohres erstreckt, einen ersten Konturkern und ein zweiten Konturkern in das Kunststoffrohr einzuschieben, die Innenwand des Kunststoffrohres in dem Umformbereich des Kunststoffrohres durch wenigstens einen der beiden Konturkerne zu verformen und mit Umformmaterial aus dem Umformbereich des Kunststoffrohres, welches bei dem Verformen bewegt wird, zwischen den beiden Konturkernen einen Körper als Innenbund zu formen, welcher mit der Innenwand des Kunststoffrohres verbunden ist und welcher in den Innenraum des Kunststoffrohres ragt und diesen verengt. Mit einem derartigen Verfahren lassen sich Rohrkörper aus Kunststoff mit einem an der Innenwand des Rohrkörpers angeordneten Innenbund, welcher als Raststeg dient, herstellen, ohne dass eine spezielle Spritzgussform angefertigt werden muss. Mit dem erfindungsgemäßen Verfahren können mit denselben Konturkernen Rohrkörper mit unterschiedlicher Länge hergestellt werden. Kern der Erfindung ist somit ein Verfahren, das es erlaubt kostengünstig herstellbare Kunststoffrohre zu Rohrkörpern mit wenigstens einem an der Innenwand angeordneten Innenbund bzw. Raststeg weiterzuverarbeiten. Da der Innenbund direkt durch die beiden zusammenwirkenden Konturkerne geformt wird lassen sich die zur Formgebung und Verdichtung des Kunststoffs erforderlichen Kräfte zielgenau einleiten und erlauben so im Gegensatz zu einem Spritzverfahren die Ausbildung eines maßhaltigen und stabilen Innenbundes auch an Kunststoffrohren mit einem Innendurchmesser, welcher kleiner ist als 12 mm.

Erfindungsgemäß ist es vorgesehen, den Körper in dem Umformbereich des Kunststoffrohres auszubilden. Hierdurch wird ein optimales Anhaften des den Raststeg bildenden Körpers erreicht.

Weiterhin sieht die Erfindung vor, den Körper als Innenbund bzw. Rassteg auszubilden, welcher an der Innenwand des Rohrkörpers einen Ring bildet oder welcher als unterbrochener Ring aus wenigstens einem Segment besteht. Ein ununterbrochen umlaufender Innenring ist geeignet, große Kräfte aufzunehmen, welche beispielsweise zwischen einem Farbrollerbügel und einer Farbwalze übertragen werden. Ein unterbrochner Innenring erlaubt es zum einen, aus wenig Material einen vergleichsweise weit in den Innenraum des Rohrkörpers stehenden Innenbund herzustellen und ermöglicht zum anderen ein besseres Durchspülen des Innenraums des Rohrkörpers, da zwischen den Segmenten Reinigungsmittel hindurch treten kann.

Gemäß der Erfindung ist es vorgesehen, den ersten und/oder den zweiten Konturkern beim Einschieben in das Kunststoffrohr um eine Längsachse des Kunststoffrohres zu drehen oder das Kunststoffrohr beim Einschieben des ersten und/oder des zweiten Konturkerns um seine Längsachse zu drehen. Hierdurch können die Reibkräfte, welche während der Durchführung des Verfahrens überwunden werden müssen, gering gehalten werden.

Es ist auch vorgesehen, die Konturkerne beim Formen des Körpers aneinander zu führen und insbesondere den zweiten Konturkern mit einem zentrisch an seiner Stirnseite angeordneten Stift beim Formen des Körpers in einen Rücksprung des ersten Konturkerns einzuführen. Hierdurch werden die Konturkerne mit minimalem Bauaufwand beim Formen des Körpers aufeinander zentriert und ermöglichen so die Herstellung eines maßgenauen Innenbundes.

Die Erfindung sieht beim Einschieben eine flächige Berührung zwischen der Innenwand des Kunststoffrohres und einer Mantelfläche des ersten Konturkerns vor. Hierdurch werden das Kunststoffrohr und der erste Konturkern ohne weitere Hilfsmittel aufeinander ausgerichtet.

Weiterhin sieht die Erfindung beim Einschieben eine flächige Berührung zwischen der Innenwand des Kunststoffrohres und einer Mantelfläche des zweiten Konturkerns vor. Hierdurch werden das Kunststoffrohr und der zweite Konturkern ohne weitere Hilfsmittel aufeinander ausgerichtet.

Erfindungsgemäß ist es vorgesehen, den ersten Konturkern vor dem zweiten Konturkern in das Kunststoffrohr einzuschieben und den ersten Konturkern insbesondere nach dem Erwärmen des Umformbereichs bis in den erwärmten Umformbereich des Kunststoffrohres zu verfahren. Hierdurch ist es möglich, den Umformvorgang möglichst rasch nach dem Erwärmen zu beginnen. Durch ein Verfahren des ersten Konturkern in den Umformbereich wird eine optimale Anbindung des Innenbundes sichergestellt, da dieser vollständig in dem Umformbereich gebildet wird und so nicht mit unerwärmtem Material in Verbindung kommt.

Weiterhin sieht die Erfindung vor, den Umformbereich des Kunststoffrohres insbesondere vor dem Einschieben des zweiten Konturkerns durch eine insbesondere als Heizpatrone ausgebildete Heizung zu erwärmen. Bei einem derartigen Ablauf kommen die Heizung und der zweite Konturkern nacheinander zum Einsatz, so dass beide Bauteile vollkommen unabhängig voneinander gehandhabt werden können.

Die Erfindung sieht auch vor, die beiden Konturkerne nach dem Formen des Körpers gegeneinander um die Längsachse des Kunststoffrohres zu verdrehen oder das Kunststoffrohr nach dem Formen des Körpers gegenüber wenigstens einem der Konturkerne zu verdrehen. Hierdurch lassen sich die Auszugskräfte, welche zum Herausziehen der Konturkerne aus dem Kunststoffrohr erforderlich sind, vergleichsweise niedrig halten, da Verklemmungen zwischen dem Kunststoffrohr und den Konturkernen durch das Verdrehen gelöst werden.

Eine Ausführungsvariante der Erfindung sieht vor, den ersten Konturkern von dem zweiten Ende des Kunststoffrohres aus in das Kunststoffrohr einzuschieben und den zweiten Konturkern von dem ersten Ende des Kunststoffrohres aus in den erwärmten Umformbereich des Kunststoffrohres einzuschieben. Ein derartiger Ablauf erlaubt eine Verwendung eines einfach aufgebauten und kostengünstigen ersten Konturkerns, welcher nur auf den anfänglichen Innendurchmesser des Kunststoffrohres angepasst sein muss.

Alternativ sieht die Erfindung vor, den ersten und den zweiten Konturkern von demselben Ende des Kunststoffrohres aus in das Kunststoffrohr einzuschieben und insbesondere den ersten Konturkern als Faltkern auszubilden. Mit einem derartigen Vorgehen können auch Kunststoffrohre, welche an einem Ende verschlossen sind, bearbeitet werden.

Schließlich sieht die Erfindung vor, den Innenraum des Kunststoffrohres senkrecht zu der Längsachse des Kunststoffrohres mit einem polygonalen oder einem elliptischen Querschnitt auszubilden. Hierdurch lassen sich die Rohrkörper auf spezielle Belastungen oder sonstige Anforderungen anpassen.

Im Sinne der Erfindung wird unter einem Innenbund ein Körper verstanden, durch welchen ein Kanal verengt oder verschlossen wird, wobei der Körper bzw. der Innenbund auch aus mehreren Segmenten gebildet sein kann. Der Innenbund dient zur Fixierung und/oder Positionierung von Bauteilen wie Haftmuffen und Walzenlagern in dem Kanal, welcher den Rohrkörper durchläuft.

Weitere Einzelheiten der Erfindung werden in der Zeichnung anhand von schematisch dargestellten Ausführungsbeispielen beschrieben. Hierbei zeigt:
- Figur 1 bis 5:: schematische Darstellungen eines Verfahrensablaufs zur Herstellung eines Rohrkörpers mit wenigstens einem Innensteg aus einem Kunststoffrohr;
- Figur 6:: eine schematische Schnittansicht des mit dem erfindungsgemäßen Verfahren hergestellten Rohrkörpers;
- Figur 7:: eine schematische Seitenansicht des in der Figur 6 gezeigten Rohrkörpers;
- Figur 8:: eine schematische Seitenansicht eines zweiten Rohrkörpers, welcher nach dem erfindungsgemäßen Verfahren hergestellt ist;
- Figur 9 bis 16:: eine schematische Darstellung eines weiteren erfindungsgemäßen Verfahrensablaufs;
- Figur 17:: eine schematische Schnittansicht eines Kunststoffrohrs, welches durch eine Heißluftdüse erwärmt wird und
- Figur 18:: einen Farbroller mit einem erfindungsgemäßen Rohrkörper.

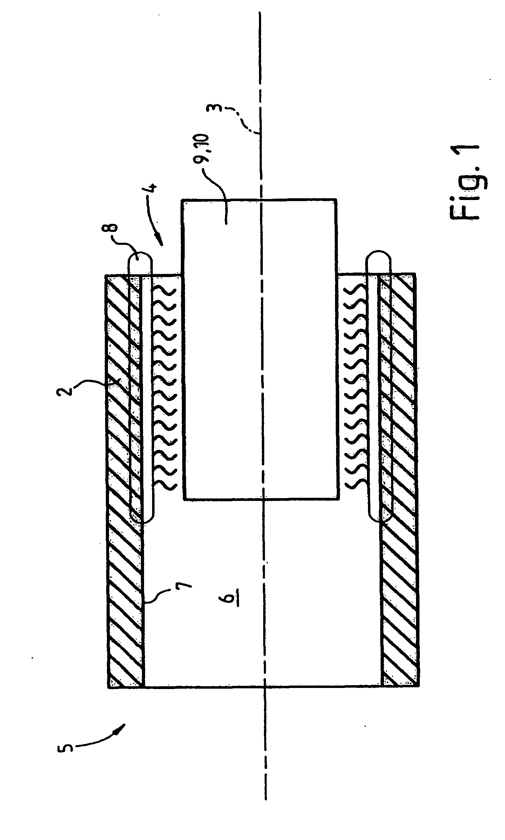

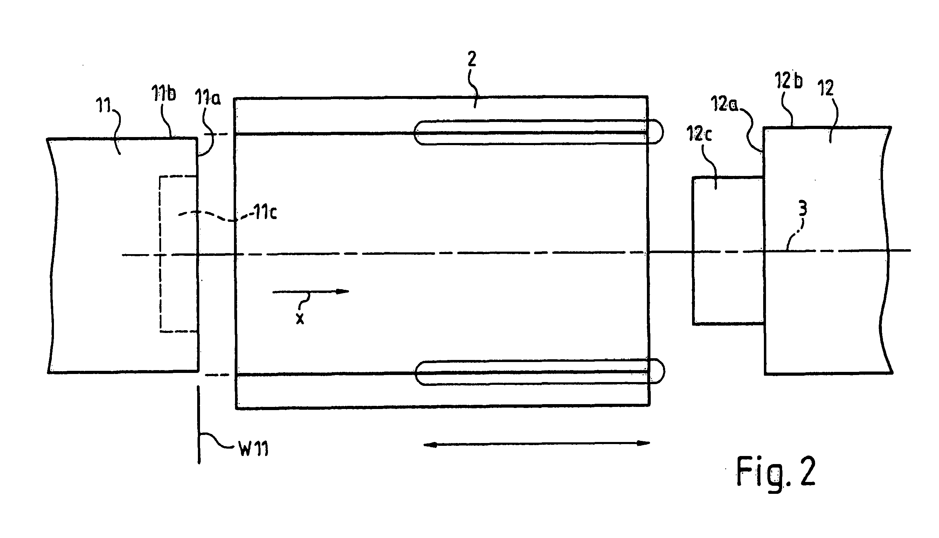

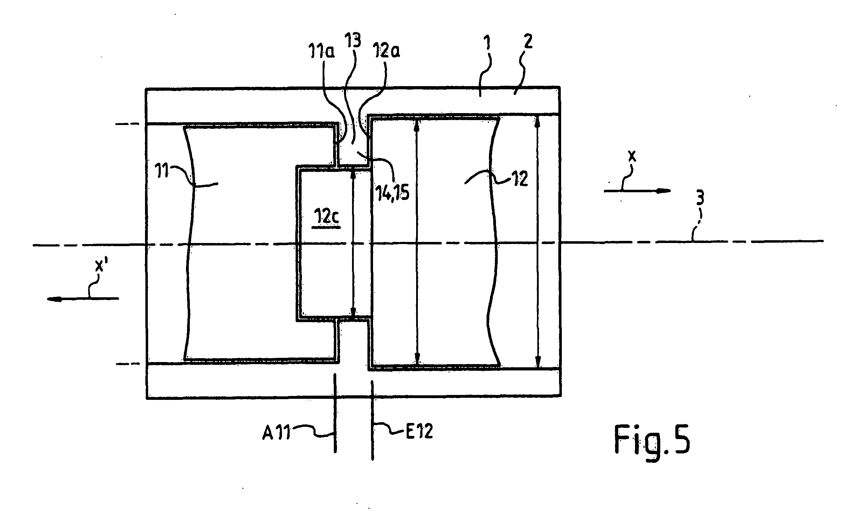

In den Figuren 1 bis 5 ist in schematischer Darstellung ein erfindungsgemäßer Verfahrensablauf zur Herstellung eines Rohrkörpers 1 (siehe Figur 5) aus einem Kunststoffrohr 2 dargestellt. Das Kunststoffrohr 2 bzw. der daraus entstehende Rohrkörper 1 sind in den Figuren 1 bis 5 jeweils im Längsschnitt gezeigt, wobei zur Erhaltung der Übersichtlichkeit in den Figuren 2 bis 5 auf die Schraffierung geschnittener Flächen verzichtet wurde. Das Kunststoffrohr 2 weist eine Längsachse 3 auf, welche dieses von einem ersten Ende 4 zu einem zweiten Ende 5 durchläuft. Ein Innenraum 6 wird durch eine Innenwand 7 des Kunststoffrohres 2 begrenzt. Die Innenwand 7 weist einen umlaufenden Umformbereich 8 auf, welcher sich von dem ersten Ende 4 in Richtung des zweiten Endes 5 erstreckt. Zur Vorbereitung einer Umformung bzw. Verformung des Kunststoffrohres 2 zu einem Rohrkörper 1 wird das Kunststoffrohr 2 in seinem Umformbereich an seiner Innenwand 7 mittels einer Heizung 9, welche als Heizpatrone 10 ausgeführt ist, erwärmt. Die Erwärmung erfolgt so, dass das Kunststoffrohr 2 in seinem Umformbereich 8 plastisch verformbar ist. Nach dem in der Figur 1 dargestellten Erwärmen des Kunststoffrohres 2 wird die Heizung 9 aus dem Kunststoffrohr 2 herausgezogen, um anschließend eine Bearbeitung des Kunststoffrohres 2 mit einem ersten Konturkern 11 und einem zweiten Konturkern 12 vorzunehmen (siehe Figur 2).

Die Konturkerne 11 und 12 sind in den Figuren 2 bis 5 jeweils nur teilweise dargestellt. Beide Konturkerne 11 und 12 sind in Bezug auf die Längsachse 3 als rotationssymmetrische Körper ausgeführt. Der erste Konturkern 11 weist eine in Richtung des zweiten Konturkerns 12 ausgerichtete Stirnseite 11a und eine Mantelfläche 11b auf. Ebenso weist der zweite Konturkern 12 eine in Richtung des ersten Konturkerns 11 ausgerichtete Stirnseite 12a und eine Mantelfläche 12b auf. An der Stirnseite 12a des zweiten Konturkerns 12 ist ein als Stift ausgebildeter Vorsprung 12c angeordnet. Der erste Konturkern 11 weist zur Aufnahme des Vorsprungs 12c einen Rücksprung 11c auf.

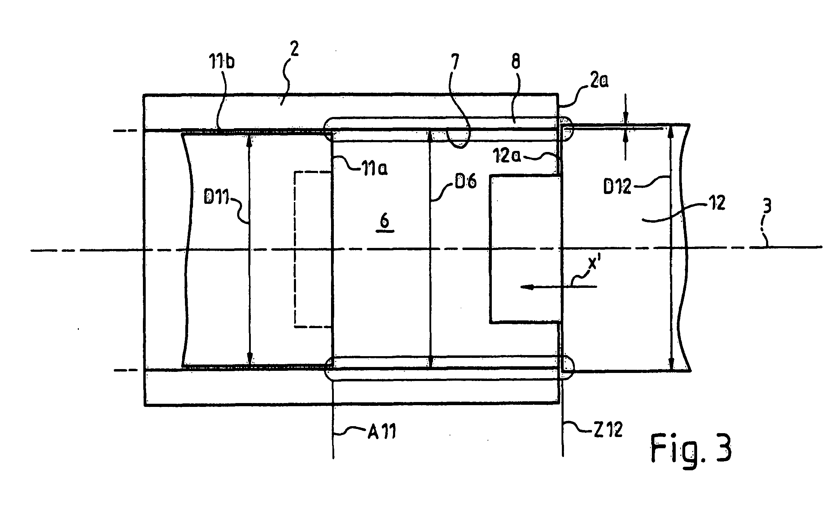

Wie in der Figur 3 dargestellt, wird der erste Konturkern 11 aus einer in der Figur 2 dargestellten Wartestellung W11 in eine Pfeilrichtung x entlang der Längsachse 3 in das Kunststoffrohr 2 in eine Arbeitsstellung A11 eingeschoben. Der Konturkern 11 grenzt mit seiner Stirnseite 11a in der Arbeitsstellung A11 entweder an dem Umformbereich 8 an, wie dies in der Figur 3 dargestellt ist, oder befindet sich gemäß einer nicht dargestellten Ausführungsvariante mit seiner Stirnseite in dem Umformbereich.

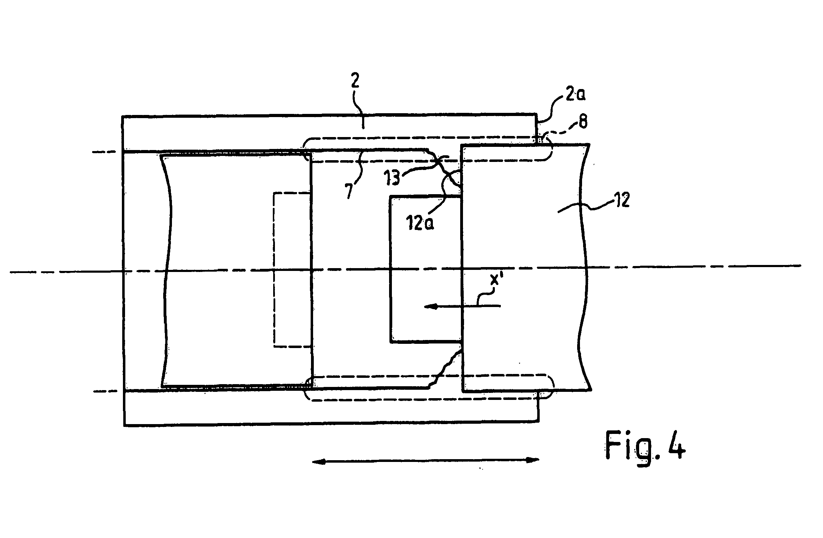

Ein Durchmesser D11 des ersten Konturkerns 11 ist so bemessen, dass dieser mit seiner Mantelfläche 11b im Sinne einer Gleitpassung an der Innenwand 7 des Kunststoffrohres 2 anliegt. Gleichzeitig oder anschließend an die Verfahrbewegung des Konturkerns 11 wird der zweite Konturkern 12 in eine Pfeilrichtung x' entlang der Längsachse 3 in Richtung des Innenraums 6 des Kunststoffrohres 2 verfahren. Im Unterschied zu dem ersten Konturkern 11 weist der zweite Konturkern 12 einen Durchmesser D12 auf, welcher größer ist als ein Durchmesser D6, welchen der Innenraum 6 in seinem Umformbereich 8 besitzt. Sobald der zweite Konturkern 12 aus einer in der Figur 3 gezeigten Zwischenstellung Z12 weiter in die Pfeilrichtung x' bewegt wird, trifft dieser mit seiner Stirnseite 12a auf eine Stirnseite 2a des Kunststoffrohres 2 und verformt, wie in der Figur 4 gezeigt, während seiner Bewegung in die Pfeilrichtung x' die Innenwand 7 in ihrem erwärmten Umformbereich 8. Während der Umformung schiebt der zweite Konturkern 12 mit seiner Stirnseite 12a Umformmaterial 13 in die Pfeilrichtung x', welches dieser von der Innenwand 7 abgetragen bzw. abgeschält hat. Bei dem Umformmaterial 13 handelt es sich um erwärmten Kunststoff aus dem Umformbereich 8. Dieser Vorgang wird fortgesetzt, bis sich der zweite Konturkern 12 in einer in der Figur 5 dargestellten Endstellung E12 befindet. In der Endstellung E12 ist das Umformmaterial 13 zwischen den beiden Konturkernen 11 und 12 bzw. zwischen deren Stirnseiten 11a und 12a und dem Vorsprung 12c zu einem Körper 14 geformt, welcher einen Innenbund 15 bildet und das Kunststoffrohr 2 zu dem Rohrkörper 1 macht, welcher zur Verwendung in einem Farbwalzenkörper geeignet ist. Das plastisch verformbare Umformmaterial 13, aus welchem der Körper 14 gebildet ist, erhärtet nunmehr als Körper 14 zu dem Innenbund 15.

Zum Entformen des mit dem beschriebenen Verfahren gebildeten Rohrkörpers 1 wird der zweite Konturkern 12 in die Pfeilrichtung x und der erste Konturkern 11 in die Pfeilrichtung x' aus dem zu dem Rohrkörper 1 verformten Kunststoffrohr 2 heraus gefahren. Zur Erleichterung dieser Herausfahrbewegungen und insbesondere zum Lösen der Konturkerne 11 oder 12 von dem Rohrkörper 1 ist es vorgesehen, die Konturkerne und den Rohrkörper 1 bzw. das Kunststoffrohr 2 relativ zueinander um die Längsachse 3 zu verdrehen. Hierbei ist es vorgesehen, eine derartige Verdrehung vor und/oder während des Herausfahrens vorzunehmen.

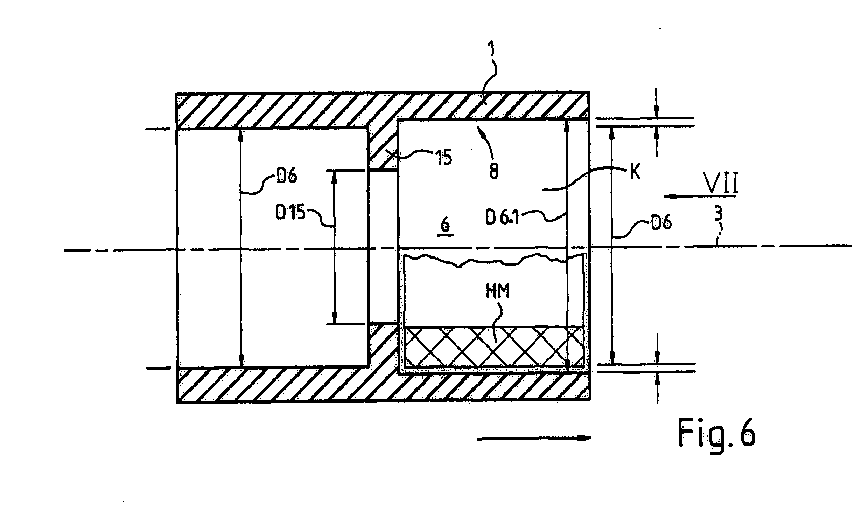

In der Figur 6 ist der Rohrkörper 1, dessen Herstellung in den Figuren 1 bis 5 beschrieben wurde, schematisch in einem Längsschnitt dargestellt. In dem Umformbereich 8 weist der aus dem Kunststoffrohr entstandene Rohrkörper 1 nun einen vergrößerten Innenraumdurchmesser D6.1 auf. Der erzeugte Innenbund 15 verengt den Innenraum 6 bis auf einen Durchmesser D15. Zu dem zweiten Ende 5 hin hat der aus dem Kunststoffrohr entstandene Rohrkörper 1 seinen ursprünglichen Durchmesser D6 beibehalten. Unterhalb der Längsachse 3 ist in der Figur 6 schematisch eine Haftmuffe HM angedeutet, welche mit Hilfe des Innenbundes 15 in dem als Kanal K ausgeführten Innenraum 6 des Rohrkörpers 1 positionierbar ist.

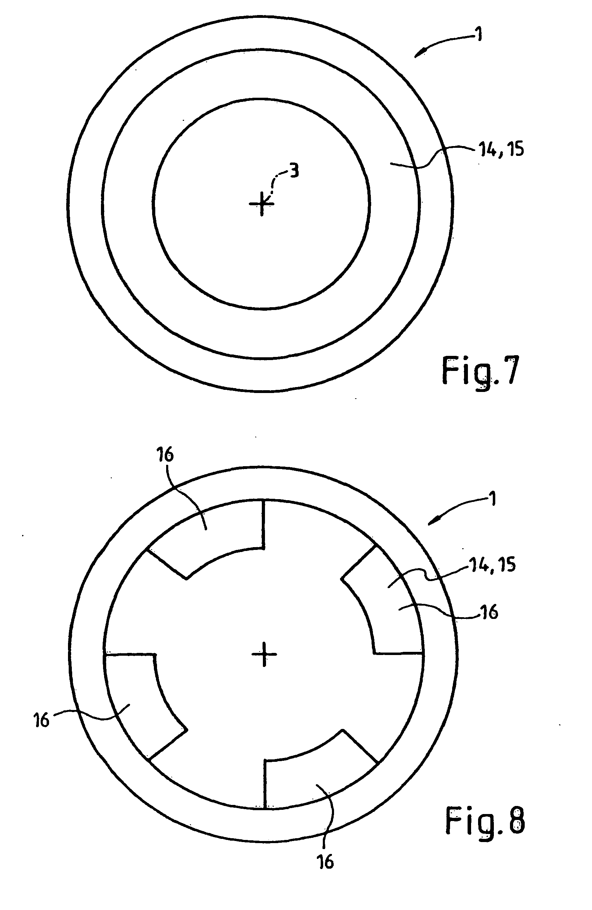

In der Figur 7 ist eine Stirnansicht aus der in der Figur 6 angedeuteten Richtung VII auf den Rohrkörper 1 dargestellt. In dieser Stirnansicht ist die rotationssymmetrische Ausbildung des Rohrkörpers 1 bezüglich seiner Längsachse 3 erkennbar.

In der Figur 8 ist eine Stirnansicht eines zweiten Rohrkörpers 1 dargestellt. Dieser Rohrkörper 1 unterscheidet sich von dem in den Figuren 5 bis 7 dargestellten ersten Rohrkörper durch einen Körper 14, welcher aus vier Segmenten 16 besteht, eine mehrfach unterbrochenen Innenbund 15 bildet. Die Herstellung eines derartigen Rohrkörpers 1 erfolgt entsprechend der Beschreibung zu den Figuren 1 bis 5, wobei ein spezieller zweiter Konturkern Verwendung findet, welcher den Umformbereich nicht über den gesamten Umfang umformt, sondern nur mit voneinander beabstandeten Fingern die erwärmte Innenwand des Kunststoffrohres in Richtung der Längsachse 3 streifenförmig abträgt und formt.

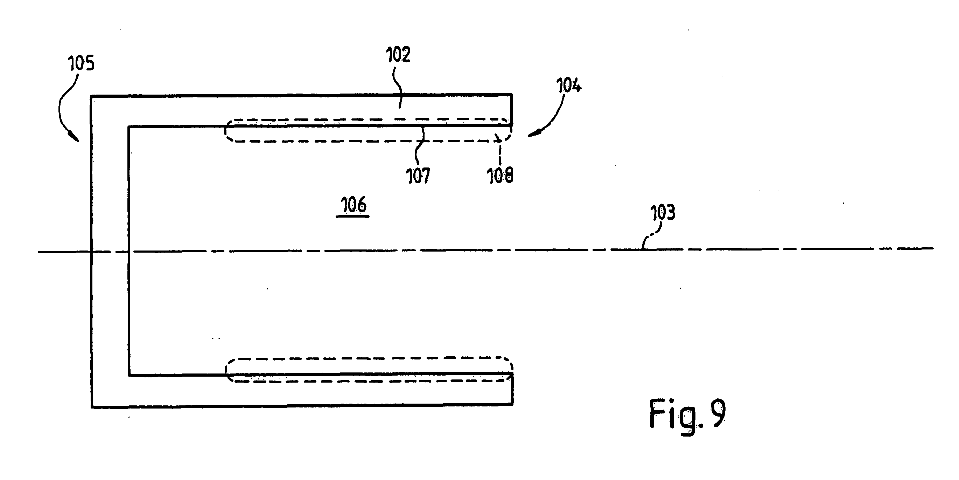

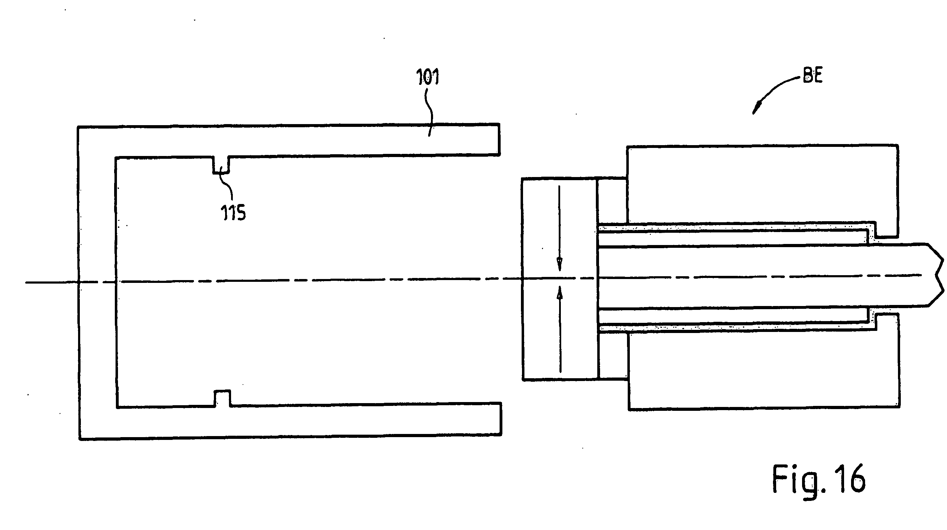

In den Figuren 9 bis 15 ist in schematischer Darstellung ein weiterer erfindungsgemäßer Verfahrensablauf zur Herstellung eines Rohrkörpers 101 (siehe insbesondere Figur 16) aus einem Kunststoffrohr 102 dargestellt. Das Kunststoffrohr 102 bzw. der daraus entstehende Rohrkörper 101 sind in den Figuren 9 bis 15 jeweils im Längsschnitt gezeigt, wobei zur Erhaltung der Übersichtlichkeit auf die Schraffierung geschnittener Flächen verzichtet wurde. Weiterhin sind Kanten, welche hinter der Schnittlinie liegen zur weiteren Vereinfachung der Darstellung teilweise nicht gezeigt. Das Kunststoffrohr 102 weist eine Längsachse 103 auf, welche dieses von einem ersten offenen Ende 104 zu einem zweiten geschlossenen Ende 105 durchläuft. Ein Innenraum 106 wird durch eine Innenwand 107 des Kunststoffrohres 102 begrenzt. Die Innenwand 107 weist einen umlaufenden Umformbereich 108 auf, welcher sich von dem ersten offenen Ende 104 in Richtung des zweiten geschlossenen Endes 105 erstreckt.

Zur Verformung bzw. Umformung des Kunststoffrohres 102 findet eine Bearbeitungseinheit BE Verwendung. Diese umfasst einen ersten Konturkern 111, einen zweiten Konturkern 112 und eine als Heizpatrone 110 ausgeführte Heizung 109. Die drei erwähnten Komponenten sind zueinander entlang der Längsachse 103 auf einer zu der Bearbeitungseinheit BE gehörenden Stange S verfahrbar, wobei der erste Konturkern 111 fest mit der Stange S verbunden ist und wobei der zweite Konturkern 112 und die Heizpatrone 111 unabhängig voneinander auf der Stange in x-Richtung und in x'-Richtung verfahrbar sind.

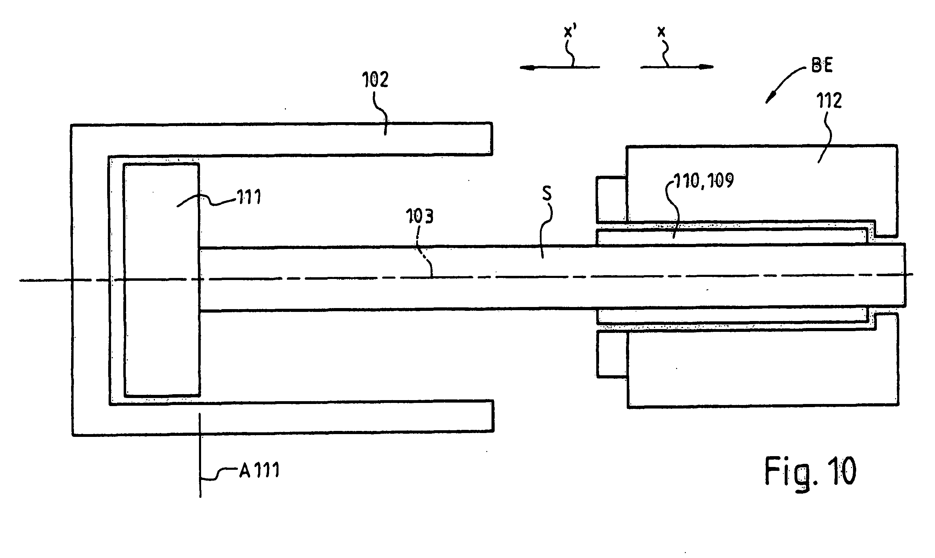

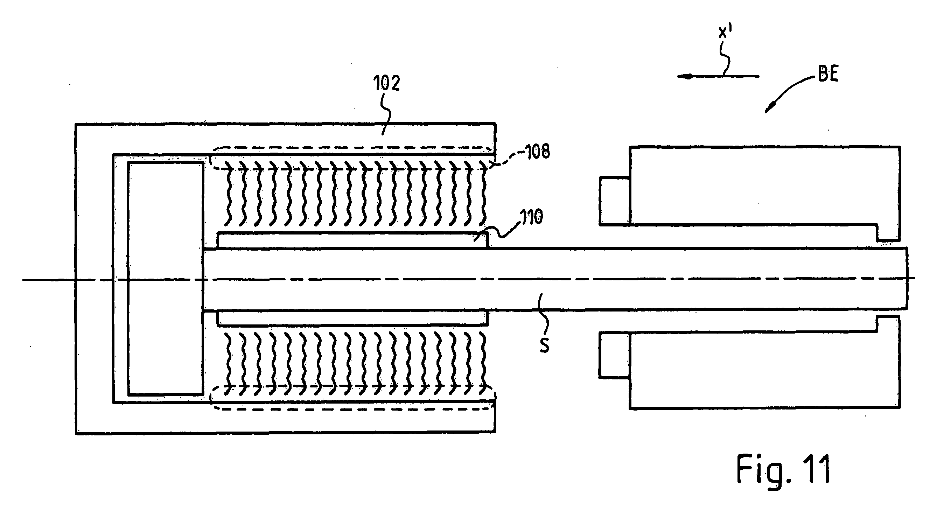

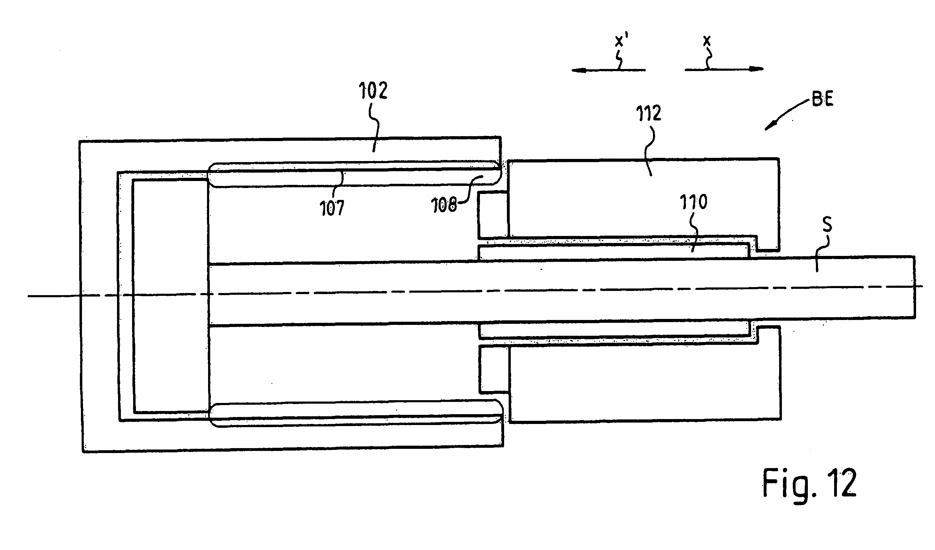

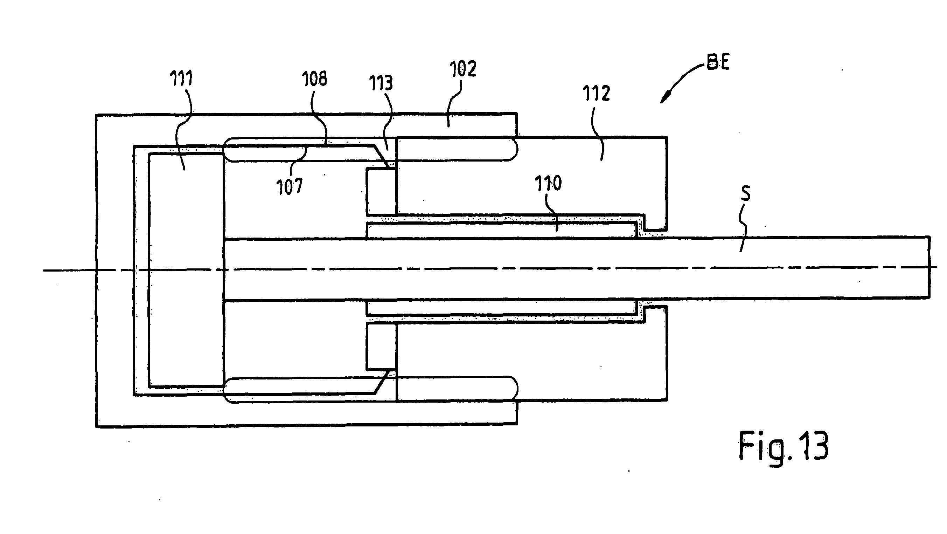

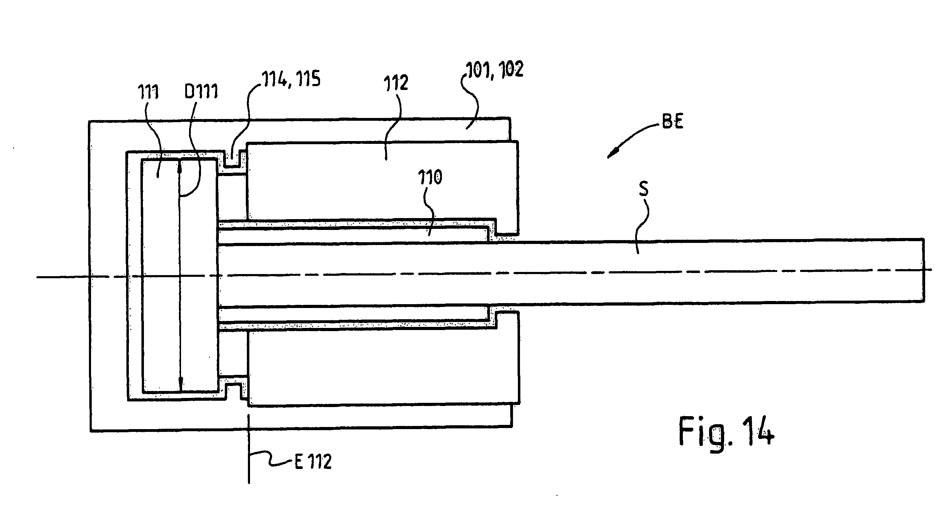

Zur Durchführung des erfindungsgemäßen Verfahrens wird die Bearbeitungseinheit BE mit dem ersten Konturkern 111 in die Pfeilrichtung x' in das Kunststoffrohr 102 eingeschoben. Der Konturkern 111 steht dann in der in der Figur 10 gezeigten Arbeitsstellung A111. Anschließend wird, wie in der Figur 11 gezeigt, die Heizpatrone 110 auf der Stange S in die Pfeilrichtung x' in das Kunststoffrohr 102 eingefahren und erwärmt dieses in seinem Umformbereich 108. Nachdem der Umformbereich 108 ausreichend erwärmt und plastisch verformbar ist, wird die Heizpatrone 110 auf der Stange S in Pfeilrichtung x wieder aus dem Kunststoffrohr 102 herausgefahren (siehe Figur 12), wobei die Heizpatrone 110 in dem zweiten Konturkern 112 aufgenommen wird. Zum Umformen bzw. Verformen des Kunststoffrohres 102 fährt anschließend der zweite Konturkern 112 zusammen mit der Heizpatrone 110 auf der Stange S in das Kunststoffrohr 102 ein und schält von der Innenwand 107 Umformmaterial 113 ab und schiebt dieses in Richtung des ersten Konturkerns 111 (siehe Figur 13). Zwischen den beiden Konturkernen 111 und 112 entsteht ein Körper 114, welcher einen Innenbund bzw. Innenwulst 115 bildet. Dieser Körper 114 ist vollständig geformt, wenn der zweite Konturkern 112 in seiner Endstellung E112 steht (siehe Figur 14).

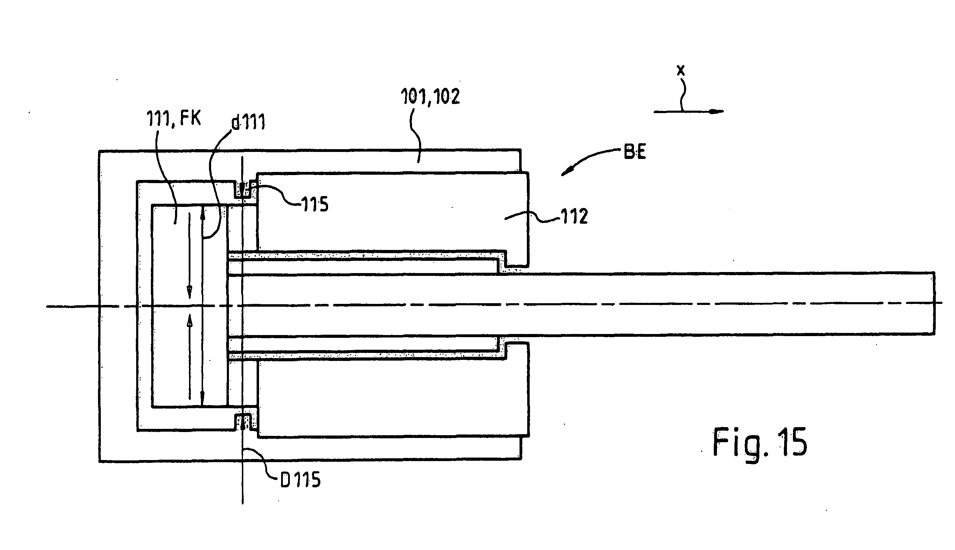

Um die Bearbeitungseinheit BE von dem Rohrkörper 101 trennen zu können, welcher aus dem Kunststoffrohr 102 gebildet wurde, wird zunächst, wie in der Figur 15 gezeigt, der erste Konturkern 111, welcher als sogenannter Faltkern FK ausgebildet ist, zusammengefaltet, um dessen Durchmesser von einem D111 auf einen Durchmesser d111 zu verringern. Anschließend wird die Bearbeitungseinheit BE aus dem erstellten Rohrkörper 101 in Pfeilrichtung x herausgezogen, wobei der Durchmesser d111 des ersten Konturkerns 111 kleiner ist als ein Innendurchmesser D115 des Innenwulstes 115.

In der Figur 16 ist der Rohrkörper 101 mit seinem durch die Bearbeitungseinheit BE gebildeten Innenwulst 115 dargestellt, wobei neben dem Rohrkörper 101 die zusammengefahrene Bearbeitungseinheit BE gezeigt ist.

Abweichend von dem oben beschriebenen Ablauf ist es auch vorgesehen, die Heizpatrone nach dem Erwärmen des Umformbereichs in dem Kunststoffrohr stehen zu lassen und den zweiten Konturkern über die Heizpatrone in das Kunststoffrohr einzufahren.

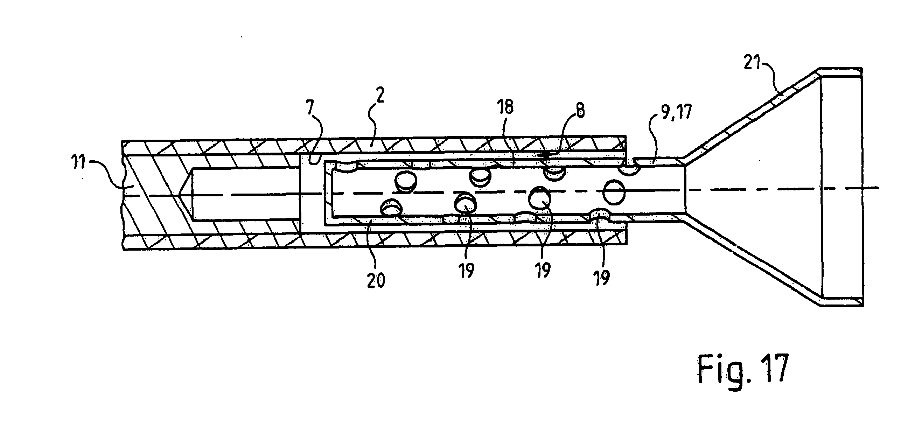

Alternativ zu einer Erwärmung mit einer als Heizpatrone ausgeführten elektrischen Heizung, wie diese zum Beispiel in der Figur 1 gezeigt ist, ist es vorgesehen eine Heizpatrone 9 als Heißluftdüse 17 auszubilden, wie dies schematisch in der Figur 17 gezeigt ist. Die Heißluftdüse 17 umfasst einen Düsenkopf 18 mit Ausströmkanälen 19 in Form eines endseitig geschlossenen Hohlzylinders 20 und einen mit dem Düsenkopf 18 verbundenen Trichter 21 zum Anschluss einer nicht dargestellten Heißluftquelle. Die Heißluftdüse 17 ist in der Figur 17 in einer Stellung gezeigt, in welcher diese bereits in ein Kunststoffrohr 2 eingeschoben ist. Im Unterschied zu der in der Figur 1 gezeigten Ausführungsvariante ist in der Darstellung der Figur 17 bereits auch schon ein erster Konturkern 11 in das Kunststoffrohr 2 eingefahren. Nach dem Erwärmen wird die Heißluftdüse 17 aus dem Kunststoffrohr 2 herausgezogen und anschließend wird in einen Umformbereich 8 des Kunststoffrohrs 2 analog zur Darstellung der Figur 2 ein nicht dargestellter zweiter Konturkern eingefahren, um das Kunststoffrohr 2 an seiner Innenwand 7 umzuformen.

Weiterhin sieht eine Ausführungsvariante der Erfindung vor, dass das Kunststoffrohr auch während der Umformung durch den zweiten Konturkern erwärmt wird.

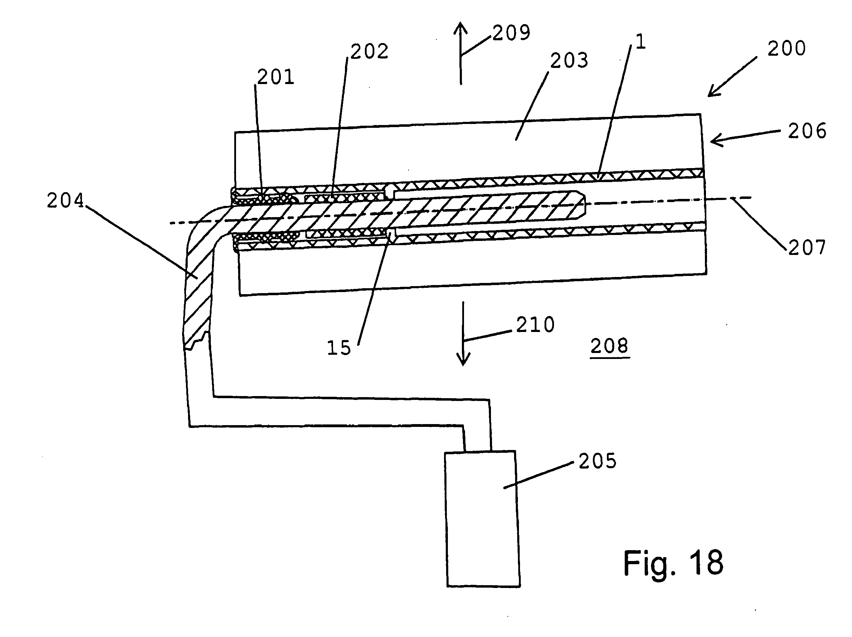

In der Figur 18 ist ein Farbroller 200 dargestellt, welcher einen erfindungsgemäß hergestellten Rohrkörper 1 umfasst. Der Farbroller 200 umfasst weiterhin ein Walzenlager 201, eine Haftmuffe 202, einen Walzenbezug 203, einen Bügel 204 und einen Griff 205. Hierbei bilden der Rohrkörper 1 und der Walzenbezug 203 einen Farbwalzenkörper 206. Der Walzenbezug 203 besteht aus Plüsch oder Schaumstoff. Die Haftmuffe 202 ist zwischen dem Walzenlager 201 und einem Innenbund 15 des Rohrkörpers 1 und dem Walzenlager 201 gehalten. Hierbei sitzt der Bügel 204 verschiebesicher in Richtung einer Längsachse 207 des Farbwalzenkörpers 206 in der Haftmuffe 202. Der Bügel 204 ist mit der Haftmuffe 202 somit zwischen dem Innenbund 15 und dem Walzenlager 201 gehalten, wobei sich der Farbwalzenkörper 206 zusammen mit dem Walzenlager 201 um den Bügel 204 und die Haftmuffe 202 dreht, wenn der Farbroller 200 auf einem Untergrund 208 in eine Pfeilrichtung 209 oder eine Pfeilrichtung 210 abgerollt wird.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Es ist vorgesehen, in dem erfindungsgemäß hergestellten Rohrkörper eine Bügel des Farbrollers mittels einem Walzenlager und einer Haftmuffe zu lagern, wobei das Walzenlager und die Haftmuffe als zylindrische Körper ausgeführt sind, die in den Rohrkörper eingeschoben werden, um dann selbst den Bügel aufzunehmen. Insbesondere sieht die Erfindung auch vor, den Innenbund als Scheibe auszubilden, welche den Kanal des Rohrkörpers verschließt.

### Bezugszeichenliste:

| | |
|---|---|
| 1 | Rohrkörper |
| 2 | Kunststoffrohr |
| 2a | Stirnseite von 2 |
| 3 | Längsachse von 2 |
| 4 | erstes Ende von 2 |
| 5 | zweites Ende von 2 |
| 6 | Innenraum von 2 bzw. 1 |
| 7 | Innenwand |
| 8 | Umformbereich |
| 9 | Heizung |
| 10 | Heizpatrone |
| 11 | erster Konturkern |
| 11a | Stirnseite von 11 |
| 11b | Mantelfläche von 11 |
| 11c | Rücksprung von 11 |
| 12 | zweiter Konturkern |
| 12a | Stirnseite von 12 |
| 12b | Mantelfläche von 12 |
| 12c | Vorsprung bzw. Stift von 12 |
| 13 | Umformmaterial |
| 14 | Körper |
| 15 | Innenbund |
| 16 | Segment |
| 17 | Heißluftdüse |
| 18 | Düsenkopf |
| 19 | Ausströmkanal |
| 20 | Hohlzylinder endseitig geschlossen |
| 21 | Trichter |
| | |
| 101 | Rohrkörper |
| 102 | Kunststoffrohr |
| 103 | Längsachse von 102 |
| 104 | erstes, offenes Ende von 102 |
| 105 | zweites, geschlossenes Ende von 102 |
| 106 | Innenraum von 102 bzw. 101 |
| 107 | Innenwand |
| 108 | Umformbereich |
| 109 | Heizung |
| 110 | Heizpatrone |
| 111 | erster Konturkern |
| 112 | zweiter Konturkern |
| 113 | Umformmaterial |
| 114 | Körper |
| 115 | Innenbund |
| | |
| 200 | Farbroller |
| 201 | Walzenlager |
| 202 | Haftmuffe |
| 203 | Walzenbezug |
| 204 | Bügel |
| 205 | Griff |
| 206 | Farbwalzenkörper |
| 207 | Längsachse von 206 |
| 208 | Untergrund |
| 209 | Pfeilrichtung |
| 210 | Pfeilrichtung |
| | |
| A11 | Arbeitsstellung von 11 |
| A111 | Arbeitsstellung von 111 |
| BE | Bearbeitungseinheit |
| D6 | Innendurchmesser von 6 |
| D6.1 | Innendurchmesser von 6 nach dem Verformen |
| D11 | Durchmesser von 11 |
| D111 | Durchmesser von 111 |
| d111 | Durchmesser von 111 (zusammengefaltet) |
| D12 | Durchmesser von 12 |
| D15 | Durchmesser von 15 |
| D115 | Durchmesser von 115 |
| E12 | Endstellung von 12 |
| E112 | Endstellung von 112 |
| FK | Faltkörper |
| HM | Haftmuffe |
| K | Kanal |
| S | Stange |
| W11 | Wartestellung von 11 |
| x | Richtung |
| x' | Richtung |
| Z12 | Zwischenstellung von 12 |

## Patentansprüche

1. Verfahren zur Herstellung eines Rohrkörpers (1, 101) aus Kunststoff mit wenigsten einem Innenbund (15, 115) für einen Farbwalzenkörper, **dadurch gekennzeichnet, dass**
- eine Innenwand (7, 107)eines Kunststoffrohres (2, 102) in einem Umformbereich (8, 108) erwärmt wird, wobei sich der Umformbereich (8, 108) in einem Innenraum (6, 106) des Kunststoffrohres (2, 102) von einem ersten Ende (4, 104) des Kunststoffrohres (2, 102) aus in Richtung eines zweiten Endes (5, 105) des Kunststoffrohres (2, 102) erstreckt,
- ein erster Konturkern (11, 111) und ein zweiter Konturkern (12, 112) in das Kunststoffrohr (2, 102) eingeschoben werden,
- die Innenwand (7, 107) des Kunststoffrohres (2, 102) in dem Umformbereich (8, 108) des Kunststoffrohres (2, 102) durch wenigstens einen der beiden Konturkerne (11, 111; 12, 112) umgeformt wird und
- mit Umformmaterial (13, 113) aus dem Umformbereich (8, 108) des Kunststoffrohres (2, 102) zwischen den beiden Konturkernen (11, 111; 12, 112) ein mit der Innenwand (7, 107) des Kunststoffrohres (2, 102) verbundener Körper (14, 114) als Innenbund (15, 115) geformt wird, welcher in den Innenraum (6, 106) des Kunststoffrohres (2, 102) ragt.

2. Verfahren nach Anspruch 1, **dadurch gekennzeichnet, dass** der Körper (14, 114) in dem Umformbereich (8, 108) des Kunststoffrohres (2, 102) ausbildet wird.

3. Verfahren nach einem der vorhergehenden Ansprüche, **dadurch gekennzeichnet, dass** der Körper (14, 114) insbesondere als ringförmiger, umlaufender Innenbund (15, 115) oder insbesondere als unterbrochener Innenbund (15, 115), welcher wenigstens ein Segment (16) umfasst, ausgebildet wird.

4. Verfahren nach einem der vorhergehenden Ansprüche, **dadurch gekennzeichnet, dass** insbesondere der erste und/oder insbesondere der zweite Konturkern (11, 111; 12, 112) beim Einschieben in das Kunststoffrohr (2, 102) um eine Längsachse (3) des Kunststoffrohres (2, 102) gedreht wird bzw. werden oder dass insbesondere das Kunststoffrohr (2, 102) beim Einschieben insbesondere des ersten und/oder insbesondere des zweiten Konturkerns (11, 111;: 12, 112) um seine Längsachse (3) gedreht wird.

5. Verfahren nach einem der vorhergehenden Ansprüche, **dadurch gekennzeichnet, dass** die Konturkerne (11, 111, 12, 112) beim Formen des Körpers (14, 114) aneinander geführt werden und dass insbesondere der zweite Konturkern (12) mit einem zentrisch an seiner Stirnseite (12a) angeordneten Vorsprung (12c) beim Formen des Körpers (14) in einen Rücksprung (11c) des ersten Konturkerns (11) eingeschoben wird.

6. Verfahren nach einem der vorhergehenden Ansprüche, **dadurch gekennzeichnet, dass** die Innenwand (7, 107) des Kunststoffrohres (2, 102) beim Einschieben des ersten Konturkerns (11, 111) von einer Mantelfläche (11b) des ersten Konturkerns (11, 111) flächig berührt wird.

7. Verfahren nach einem der vorhergehenden Ansprüche, **dadurch gekennzeichnet, dass** die Innenwand (7, 107) des Kunststoffrohres (2, 102) beim Einschieben des zweiten Konturkerns (12, 112) von einer Mantelfläche (12b) des zweiten Konturkerns (12, 112) flächige berührt wird.

8. Verfahren nach einem der vorhergehenden Ansprüche, **dadurch gekennzeichnet, dass** der erste Konturkern (11, 111) vor dem zweiten Konturkern (12, 112) in das Kunststoffrohr (2, 102) eingeschoben wird und dass der erste Konturkern (11, 111) insbesondere nach dem Erwärmen des Umformbereichs (8, 108) bis in den erwärmten Umformbereich (8, 108) des Kunststoffrohres verfahren wird.

9. Verfahren nach einem der vorhergehenden Ansprüche, **dadurch gekennzeichnet, dass** der Umformbereich (8, 108) des Kunststoffrohres (2, 102) insbesondere vor dem Einschieben des zweiten Konturkerns (12, 112) durch eine insbesondere als Heizpatrone (10, 110) ausgebildete Heizung (9, 109) erwärmt wird, wobei die Heizpatrone (10, 110) insbesondere durch Heizdrähte erwärmt wird oder insbesondere als Heißluftdüse (17) ausgeführt ist.

10. Verfahren nach einem der vorhergehenden Ansprüche, **dadurch gekennzeichnet, dass** die beiden Konturkerne (11, 111; 12, 112) nach dem Formen des Körpers (14, 114) gegeneinander um die Längsachse (3) des Kunststoffrohres (2, 102) verdreht werden oder dass das Kunststoffrohr (2, 102) nach dem Formen des Körpers (14, 114) insbesondere gegenüber wenigstens einem der Konturkerne (11, 111; 12, 112) verdreht wird.

11. Verfahren nach einem der vorhergehenden Ansprüche, **dadurch gekennzeichnet, dass** der erste Konturkern (11) von dem zweiten Ende (5) des Kunststoffrohres (2) aus in das Kunststoffrohr (2) eingeschoben wird und dass der zweite Konturkern (12) von dem ersten Ende (4) des Kunststoffrohres (2) aus insbesondere in den erwärmten Umformbereich (8) des Kunststoffrohres (2) eingeschoben wird.

12. Verfahren nach einem der vorhergehenden Ansprüche 1 bis 10, **dadurch gekennzeichnet, dass** der erste und der zweite Konturkern (111, 112) von dem selben Ende (104) des Kunststoffrohres (2) aus in das Kunststoffrohr (2) eingeschoben werden und dass insbesondere der erste Konturkern (111) als Faltkern (FK) ausgebildet ist.

13. Verfahren nach einem der vorhergehenden Ansprüche 1 bis 3, 5 bis 9, 11 oder 12, **dadurch gekennzeichnet, dass** insbesondere der Innenraum (6, 106) des Kunststoffrohres (2, 102) senkrecht zu der Längsachse (3) des Kunststoffrohres (2, 102) einen polygonalen Querschnitt aufweist oder dass insbesondere der Innenraum (6, 106) des Kunststoffrohres (2, 102) senkrecht zu der Längsachse (3) des Kunststoffrohres (2, 102) einen elliptischen Querschnitt aufweist.

## Claims

1. A method for the production of a tube body (1, 101) made from plastic, having at least one inner collar (15, 115) for an inking roller body, **characterized in that**
- an inner wall (7, 107) of a plastic tube (2, 102) is heated in a forming region (8, 108), wherein the forming region (8, 108) extends in an inner space (6, 106) of the plastic tube (2, 102) coming from a first end (4, 104) of the plastic tube (2, 102) in the direction of a second end (5, 105) of the plastic tube (2, 102),
- a first contour core (11, 111) and a second contour core (12, 112) are each inserted into the plastic tube (2, 102),
- the inner wall (7, 107) of the plastic tube (2, 102) is deformed in the forming region (8, 108) of the plastic tube (2, 102) by means of at least one of the two contour cores (11, 111; 12, 112), and
- with deforming material (13, 113) from the forming region (8, 108) of the plastic tube (2, 102) between the two contour cores (11, 111; 12, 112), a body (14, 114) connected to the inner wall (7, 107) of the plastic tube (2, 102) is formed as the inner collar (15, 115), which projects into the inner space (6, 106) of the plastic tube (2, 102).

2. The method according to claim 1, **characterized in that** the body (14, 114) is embodied in the forming region (8, 108) of the plastic tube (2, 102).

3. The method according to one of the previous claims, **characterized in that** the body (14, 114) is embodied in particular as an annular, circumferential inner collar (15, 115), or in particular as an interrupted inner collar (15, 115), which comprises at least one segment (16).

4. The method according to one of the previous claims, **characterized in that** in particular the first and/or in particular the second contour core (11, 111; 12, 112) is/are pivoted about a longitudinal axis (3) of the plastic tube (2, 102) during the insertion into the plastic tube (2, 102), or that in particular the plastic tube (2, 102) is pivoted about its longitudinal axis (3) during the insertion in particular of the first and/or in particular of the second contour core (11, 111; 12, 112).

5. The method according to one of the previous claims, **characterized in that** the contour cores (11, 111; 12, 112) are guided against each other during the forming of the body (14, 114), and that in particular the second contour core (12), at a protrusion (12c) being disposed centrically at the front face (12a) thereof, is inserted into a recess (11c) of the first contour core (11) during the forming of the body (14).

6. The method according to one of the previous claims, **characterized in that** the inner wall (7, 107) of the plastic tube (2, 102) is surface-contacted by a lateral area (11b) of the first contour core (11, 111) during the insertion of the first contour core (11, 111).

7. The method according to one of the previous claims, **characterized in that** the inner wall (7, 107) of the plastic tube (2, 102) is surface-contacted by a lateral area (12b) of the second contour core (12, 112) during the insertion of the second contour core (12, 112).

8. The method according to one of the previous claims, **characterized in that** the first contour core (11, 111) is inserted into the plastic tube (2, 102) before the second contour core (12, 112), and that the first contour core (11, 111) is moved up into the heated forming region (8, 108) of the plastic tube, in particular after the heating the forming region (8, 108) .

9. The method according to one of the previous claims, **characterized in that** the forming region (8, 108) of the plastic tube (2, 102) is heated by means of a heater (9, 109) being embodied particularly as a heating cartridge (10, 110), particularly before the insertion of the second contour core (12, 112), wherein the heating cartridge (10, 110) is heated in particular by means of heating wires, or is embodied in particular as a hot air nozzle (17).

10. The method according to one of the previous claims, **characterized in that** the two contour cores (11, 111; 12, 112) are pivoted against each other about the longitudinal axis (3) of the plastic tube (2, 102) after forming of the body (14, 114), or that the plastic tube (2, 102) is pivoted particularly against at least one of the contour cores (11, 111; 12, 112) after the forming of the body (14, 114).

11. The method according to one of the previous claims **characterized in that** the first contour core (11) is inserted into the plastic tube (2) coming from the second end (5) of the plastic tube (2), and that the second contour core (12) is inserted in particular into the heated forming region (8) of the plastic tube (2) coming from the first end (4) of the plastic tube (2).

12. The method according to one of the previous claims 1 to 10, **characterized in that** the first and the second contour cores (111, 112) are each inserted into the plastic tube (2) coming from the same end (104) of the plastic tube (2), and that in particular the first contour core (111) is embodied as a folded core (FK).

13. The method according to one of the previous claims 1 to 3, 5 to 9, 11 or 12, **characterized in that** in particular the inner space (6, 106) of the plastic tube (2, 102) perpendicular to the longitudinal axis (3) of the plastic tube (2, 102) has a polygonal cross-section, or that in particular the inner space (6, 106) of the plastic tube (2, 102) perpendicular to the longitudinal axis (3) of the plastic tube (2, 102) has an elliptical cross-section.

## Revendications

1. Procédé de fabrication d'un corps de tuyau (1, 101) en plastique comprenant au moins un épaulement intérieur (15, 115) pour un corps de rouleau encreur, **caractérisé :**
- **en ce qu'**une paroi intérieure (7, 107) d'un tuyau en plastique (2, 102) est chauffée dans une zone de déformation (8, 108), étant entendu que la zone de déformation (8, 108) s'étend dans un espace intérieur (6, 106) du tuyau en plastique (2, 102) depuis une première extrémité (4, 104) du tuyau en plastique (2, 102) en direction d'une deuxième extrémité (5, 105) du tuyau en plastique (2, 102),
- une première âme profilée (11, 111) et une deuxième âme profilée (12, 112) sont insérées dans le tuyau en plastique (2, 102),
- la paroi intérieure (7, 107) du tuyau en plastique (2, 102) est déformée dans la zone de déformation (8, 108) du tuyau en plastique (2, 102) par au moins une des deux âmes profilées (11, 111 ; 12, 112), et
- au moyen de matériau de déformation (13, 113) provenant de la zone de déformation (8, 108) du tuyau en plastique (2, 102), un corps (14, 114) relié avec la paroi intérieure (7, 107) du tuyau en plastique (2, 102) est réalisé comme épaulement intérieur (15, 115) entre les deux âmes profilées (11, 111 ; 12, 112), lequel corps s'étend dans l'espace intérieur (6, 106) du tuyau en plastique (2, 102).

2. Procédé selon la revendication 1, **caractérisé en ce que** le corps (14, 114) est formé dans la zone de déformation (8, 108) du tuyau en plastique (2, 102).

3. Procédé selon l'une des revendications précédentes, **caractérisé en ce que** le corps (14, 114) est réalisé en particulier comme épaulement intérieur circulaire continu (15, 115) ou en particulier comme épaulement intérieur interrompu (15, 115), lequel comprend au moins un segment (16).

4. Procédé selon l'une des revendications précédentes, **caractérisé en ce qu'**en particulier la première et/ou en particulier la deuxième âme profilée (11, 111 ; 12, 112) est mise ou sont mises en rotation autour d'un axe longitudinal (3) du tuyau en plastique (2, 102) lors de l'insertion dans le tuyau en plastique (2, 102) ou **en ce qu'**en particulier le tuyau en plastique (2, 102) est mis en rotation autour de son axe longitudinal (3) lors de l'insertion en particulier de la première et/ou en particulier de la deuxième âme profilée (11, 111 ; 12, 112).

5. Procédé selon l'une des revendications précédentes, **caractérisé en ce que** les âmes profilées (11, 111 ; 12, 112) sont guidées l'une avec l'autre lors de la formation du corps (14, 114) et **en ce qu'**en particulier la deuxième âme profilée (12) est insérée dans un retrait (11c) de la première âme profilée (11) avec une saillie (12c) agencée en position centrale sur son côté frontal (12a) lors de la formation du corps (14).

6. Procédé selon l'une des revendications précédentes, **caractérisé en ce que** lors de l'insertion de la première âme profilée (11, 111), la paroi intérieure (7, 107) du tuyau en plastique (2, 102) entre en contact sur toute sa surface avec une surface de revêtement (11b) de la première âme profilée (11, 111).

7. Procédé selon l'une des revendications précédentes, **caractérisé en ce que** lors de l'insertion de la deuxième âme profilée (12, 112), la paroi intérieure (7, 107) du tuyau en plastique (2, 102) entre en contact sur toute sa surface avec une surface de revêtement (12b) de la deuxième âme profilée (12, 112).

8. Procédé selon l'une des revendications précédentes, **caractérisé en ce que** la première âme profilée (11, 111) est insérée dans le tuyau en plastique (2, 102) avant la deuxième âme profilée (12, 112) et **en ce qu'**en particulier après le chauffage de la zone de déformation (8, 108), la première âme profilée (11, 111) est avancée jusqu'à la zone de déformation chauffée (8, 108) du tuyau en plastique (2, 102).

9. Procédé selon l'une des revendications précédentes, **caractérisé en ce qu'**en particulier avant l'insertion de la deuxième âme profilée (12, 112), la zone de déformation (8, 108) du tuyau en plastique (2, 102) est chauffée au moyen d'un chauffage (9, 109) réalisé en particulier comme cartouche chauffage (10, 110), étant entendu que la cartouche chauffante (10, 110) est en particulier chauffée au moyen de résistances de chauffage ou en particulier réalisée comme buse à air chaud (17).

10. Procédé selon l'une des revendications précédentes, **caractérisé en ce qu'**après la formation du corps (14, 114), les deux âmes profilées (11, 111 ; 12, 112) sont mises en rotation l'une par rapport à l'autre autour de l'axe longitudinal (3) du tuyau en plastique (2, 102) ou **en ce qu'**après la formation du corps (14, 114), le tuyau en plastique (2, 102) est mis en rotation en particulier par rapport à au moins une des âmes profilées (11, 111 ; 12, 112).

11. Procédé selon l'une des revendications précédentes, **caractérisé en ce que** la première âme profilée (11) est insérée dans le tuyau en plastique (2) à partir de la deuxième extrémité (5) du tuyau en plastique (2) et **en ce que** la deuxième âme profilée (12) est insérée en particulier dans la zone de déformation chauffée (8) du tuyau en plastique (2) à partir de la première extrémité (4) du tuyau en plastique (2).

12. Procédé selon l'une des revendications 1 à 10, **caractérisé en ce que** la première et la deuxième âmes profilées (111, 112) sont insérées dans le tuyau en plastique (2) à partir de la même extrémité (104) du tuyau en plastique (2) et **en ce qu'**en particulier la première âme profilée (111) est réalisée comme âme pliable (FK).

13. Procédé selon l'une des revendications 1 à 3, 5 à 9, 11 ou 12 précédentes, **caractérisé en ce qu'**en particulier l'espace intérieur (6, 106) du tuyau en plastique (2, 102) présente une section polygonale perpendiculairement à l'axe longitudinal (3) du tuyau en plastique (2, 102) ou **en ce qu'**en particulier l'espace intérieur (6, 106) du tuyau en plastique (2, 102) présente une section elliptique perpendiculairement à l'axe longitudinal (3) du tuyau en plastique (2, 102).
